# EUROPEAN PATENT APPLICATION

(11) **EP 0 725 332 A2**
(43) Date of publication of application: **07.08.1996**
(21) Application number: 96101291.1
(22) Date of filing: 30.01.1996
(51) Int. Cl.: G06F 9/00

(54) **Process information management system**

(30) Priority: 31.01.1995 JP 14435/95
(71) Applicant: MITSUBISHI DENKI KABUSHIKI KAISHA, Tokyo 100 (JP)
(72) Inventor: Sasaki, Mikio, c/o Mitsubishi Denki K.K., Kamakura-shi, Kanagawa 247 (JP); Tsuchida, Taiji, c/o Mitsubishi Denki K.K., Kamakura-shi, Kanagawa 247 (JP); Ozu, Hironao, c/o Mitsubishi Denki K.K., Kamakura-shi, Kanagawa 247 (JP)
(74) Representative: Ritter und Edler von Fischern, Bernhard, Dipl.-Ing.

(57) **Abstract**

A system that executes a desired node from a process flowchart using step nodes making up a sequence of processes for carrying out a predetermined job and arrows placed between the nodes to indicate the process order. The system includes a unit for specifying a desired node, a unit for executing application programs providing various functions for executing the specified node, a unit for setting information for linking the application programs, and a unit for executing retrieval according to the linkage information. For executing the specified node, the application programs are executed appropriately and information which is output by other application programs and is to be used is also retrieved according to the linkage information.

## Description

### BACKGROUND OF THE INVENTION

### 1. Field of the Invention

This invention relates to a system which manages process information, and more particularly to a system which displays a sequence of processes for carrying out a predetermined job as a flowchart and executes desired nodes from the flowchart or aids in the execution of the nodes.

### 2. Description of the Related Art

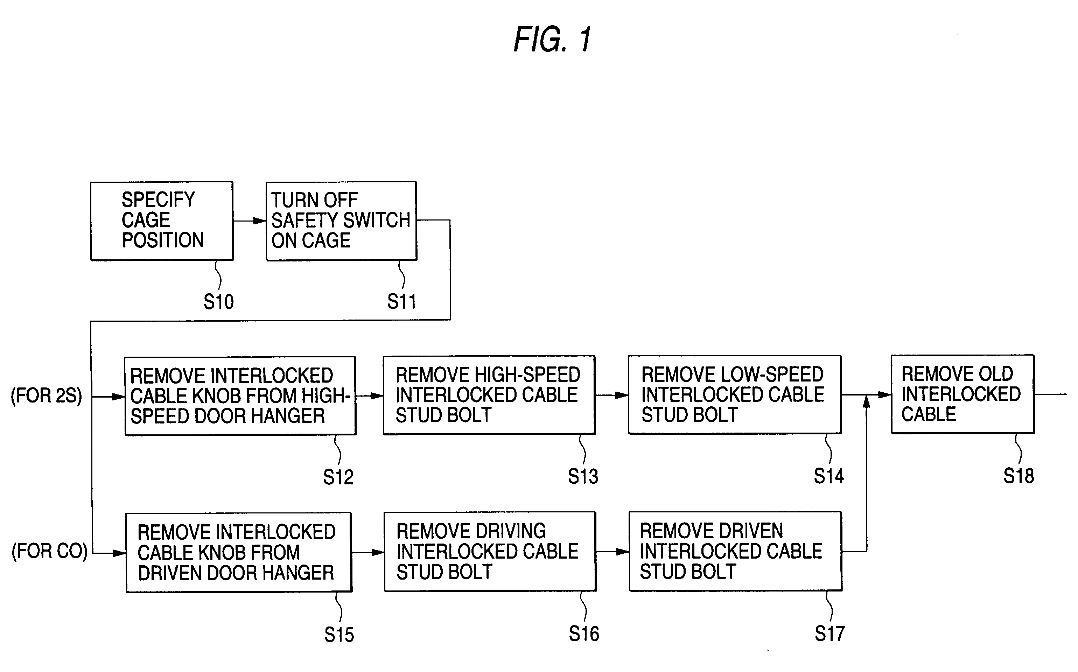

In recent years, various approaches to efficient accomplishment of jobs have been made with advances in diversity and complication of the job contents regardless of the type of business. The simplest one of the approaches is a method wherein a sequence of processes required for carrying out a job is once divided into independent steps and a flowchart showing the execution order of the steps is created. This method will be discussed with reference to Figure 1 by taking an elevator maintenance job as an example.

Figure 1 is a drawing showing a sequence of steps for replacing an interlocked cage-door cable for one elevator. As far as the job, each step can be interpretted by a work step. However, because there is a case where each step is not accompanied by manual work depending on the work step, the term "step" is simply used in this specification. It may be considered as a part of a maintenance manual of the elevator.

In Figure 1, one rectangular box denotes one step. It is named a node. On the other hand, the concatenation lines indicating a flow of the nodes are called arrows.

The cable is replaced according to steps S10-S18 as shown in the figure. The work contents to be executed in each step are as described in the figure. In the example shown, the intermediate node S11 branches to steps S12-S14 or S15-S17 depending on the type name of the elevator 2S or C0. S10-S18 indicate steps to removal of the cable; in fact, a new cable is attached at steps S19 and later (not shown).

A job flow is thus prepared as a flowchart, whereby even unskilled workers like new employees, simply beginners, would be able to appropriately select the next step to be executed out of the flowchart in each phase for convenience of carrying out the job. Such clarification of the processing procedure is also called putting the job into a manual.

A different approach to improvement in efficient accomplishment of jobs is to put job relevant information into a database. Information required in each phase of jobs, in other words, at each step is stored in the database and each person retrieves data from the database in execution of the steps, thereby smoothing accomplishment of the job. For example, in Figure 1, the location to be specified as the "cage position" at step S10 and the product number, price, etc., of the cable to be replaced are information to be stored in the database.

Therefore, the job efficiency may be able to be greatly improved by well uniting the two approaches, namely, putting the jobs into a flow and putting the jobs into a database. Most of all, how the beginner can carry out his job for a short time according to the correct procedure for himself or herself, in other words, how the beginner is taught job knowhow is a theme common to enterprises.

An outline of "Management system of technical information system based on knowledge base" described in Japanese Patent Unexamined Publication No. Hei 4-34646 will be given as a technique for uniting putting the jobs into a flow and putting the jobs into a database with teaching of knowhow as the main purpose.

The system is to aid in education of beginners, particularly jobs of designers by associating a technical information system and a knowledge database with each other; it features the following configuration:

The system for filing and retrieving technical information required for design jobs based on design job knowledge information stored in the knowledge base has means for systematizing design job flows as knowledge information and displaying them as a hierarchical structure, means, when a specific item is specified from the displayed hierarchical structure, for automatically generating a keyword related to the specified item, and means for filing technical information based on the keyword or displaying the retrieval result.

Therefore, when an inquiry about the job is made at each design step, namely, each work item, the name of the step is used as a keyword intact and necessary relevant information is filed or is displayed on the screen. The system shows information stored in the database on the basis of the design job flow for efficient accomplishment of the job.

However, the above-mentioned related art is deemed to be susceptible to improvement in the following points:

### Problem 1: Knowhow cannot automatically be stored.

Although desired information is extracted from already stored design information, the design information needs to be registered separately from daily jobs. Therefore, maintenance of the system requires labor and the result is that making the most of knowhow easily becomes a mere name. On the other hand, a method of registering technical documents, etc., intact is also possible to reduce the maintenance labor, in which case it becomes difficult to obtain optimum information by keyword retrieval.

### Problem 2: Not beyond reference to information.

Reference to the information concerning the step can only be made by keyword retrieval; a kind of the help function is simply provided. Essentially, a system which developmentally executes the step when a step is specified by some method should contribute to improvement in job efficiency.

### Problem 3: Job support customized to suit each person cannot be provided.

Although the design job is handled as the embodiment in the above-mentioned related art, the related art may have a small effect on other jobs, because it is considered that generally the persons who are in charge of design should perform a similar procedure regardless of the skilled person or beginner, but in other types of business, the procedure may have to be changed depending on whether the person in charge is skilled or a beginner. For example, in such a job to plan a product from market research, the step which the beginner should decide from wide research may be decided by the skilled person from experience.

On the other hand, since a flowchart covers all steps related to carrying out a job in some degree, each person is at a loss which step an operator should select for execution to suit his level.

The causes of the problems are as follows:
Cause 1: As a flowchart becomes full, a flow of steps to be executed by each person becomes hard to see. This is a bad effect involved in putting a job into a routine. Throughout the remaining part of the specification, an original flowchart covering all steps will be called a flow source chart and a flowchart showing a flow of steps selected and executed by each person will be called a selective flowchart.
Cause 2: Although the job conditions are not constant and the job form changes daily, the job is applied to a fixed flow source chart for execution of the job, thus it becomes difficult to take flexible steps at real time.
Cause 3: There is no device for automatically leaving the selective flowchart of each person. That is, knowhow for producing the best result with respect to time, labor, costs, etc., by executing which steps in what order is not left.

### SUMMARY OF THE INVENTION

The present invention has been made in view of the above problems, and therefore an object of the invention are to automatically accumulate knowhow.

To solve the above-mentioned problem 1, the invention is to automatically store selective flowcharts of persons. The result is that the beginner can adopt one of the selective flowcharts stored in the past for jobs having conditions similar to those of the job to be carried out by him or her rather than a very large flow source chart. Also, the invention provides means for editing such a selective flowchart, enabling flexible steps to be taken for the job.

Another object of the invention is to execute steps or aid in execution of steps.

To solve the above-mentioned problem 2, the invention is to not only make reference to relevant information to each step, but also execute the step if possible. For example, if the step is "list parts," necessary programs such as a spreadsheet program are started for creating a parts list as the step is specified. At this time, a hypermedia technique for enabling information linkage among application programs is used.

Still another object of the invention is to provide job support to suit each person.

To solve the above-mentioned problem 3, the invention is to also record attribute information concerning each step in a flow source chart. Each person can use this information to retrieve optimum information for his or her purpose.

It is therefore a general object of the invention to provide an optimum system for each person to prepare a selective flowchart to suit his or her level and purpose and execute his or her job according to the flowchart while putting each job into a flow and job relevant information into a database.

To the ends, according to the invention, there is provided a process information management system, when steps making up a sequence of processes for carrying out a predetermined job are defined as nodes and a concatenation line placed between the nodes for indicating the process order is defined as an arrow, which executes a desired node from a process flowchart using the nodes and arrows or aids in the execution of the node, the system comprising means for specifying a desired node from the nodes, means for executing application programs providing various functions for executing the specified node or aiding in the execution of the node, means for setting linkage information for linking the application programs, and means for executing retrieval according to the linkage information, wherein for executing the specified node or aiding in the execution of the node, the application programs are executed appropriately and information which is output by other application programs and is to be used is retrieved according to the linkage information.

The process information management system further includes means for grouping nodes closely related to each other and means for storing the grouped nodes as a module.

The process information management system further includes means for storing attribute information of each of the nodes or each of the modules, means for retrieving a node or module satisfying a predetermined requirement according to the attribute information, and means for highlighting the node or module satisfying the predetermined requirement on the flowchart.

The process information management system further includes means for changing a display state of each of the arrows in response to the priority, importance, occurrence frequency, or optimum degree of a process.

The process information management system further includes means, when one of the arrows branches to a plurality of nodes or modules, for indicating that all of the nodes or modules are to be executed or that one of them is to be executed alternatively.

The process information management system further includes means for storing a process state of each node and means responsive to the process state of each node for changing the display state of the node.

The process information management system further includes means for storing information relevant to each node as node relevant information, means for storing specified nodes in order, means for determining the job contents from the node specification order, and means for selecting the node relevant information to be referenced in the determined job contents.

The process information management system further includes means, when a node is specified, for displaying the selected node relevant information for the specified node.

The process information management system further includes means, when one node A is specified, for determining a subsequent node B to be inevitably specified and means for automatically selecting or executing the subsequent node B upon completion of execution of the node A or aid in the execution thereof.

The process information management system further includes means for storing information relevant to all nodes contained in the module as module relevant information and means for placing the module relevant information in a state in which the information can be referenced when executing any node contained in the module or aiding in the execution thereof.

The process information management system wherein the attribute information contains information indicating whether or not the node or module is indispensable for carrying out a job, further includes means for storing nodes or modules specified during carrying out the job and means for giving a warning when an indispensable node or module is not specified for carrying out the job.

According to the invention, there is provided a process information management system comprising means for specifying a desired node from nodes, means for connecting the specified nodes in order for automatically generating a new flowchart, means for displaying the new flowchart generated, and means for storing the new flowchart generated, wherein node execution or aid in the execution is again enabled from the new flowchart.

The process information management system further includes means for executing application programs providing various functions for executing the specified node or aiding in the execution of the node, means for setting linkage information for linking the application programs, and means for executing retrieval according to the linkage information, wherein when the specified node is executed or aiding in the execution of the node is performed, the application programs are executed appropriately and necessary information of output information of other application programs is retrieved according to the linkage information.

The process information management system further includes means for monitoring the start or termination of the application program or file operation in the application program and means for connecting a step occurring as the application program is executed to the new flowchart as a node when the start or termination of the application program or file operation in the application program occurs.

The process information management system further includes means for editing the new flowchart.

The process information management system further includes means for giving a warning when the difference between the new flowchart and a predetermined standard flowchart is greater than a given determination criterion.

The process information management system further includes means for specifying the format to be adopted as the information format of output information provided as a result of execution of each node contained in the new flowchart, means for converting the output information into the specified information format, and means for integrating the output information converted into the specified information format.

According to the invention, when a desired node is specified, application programs required for executing the node or aiding in the execution thereof are executed. At this time, linkage information for linking the application programs is set, thus information which is output by other application programs and is to be used can be retrieved according to the linkage information. Resultantly, execution of the specified node or aiding in the execution thereof is enabled.

According to the invention, nodes closely related to each other are grouped and stored as a module. Therefore, the module can be used to generate another flow source chart.

According to the invention, since the attribute information of each node or each module is stored, a node or module satisfying a predetermined requirement can be retrieved according to the attribute information. Since the node or module thus retrieved is highlighted on the flowchart, the retrieval result can be easily known.

According to the invention, since the arrow display state is changed in response to the priority, importance, occurrence frequency, or optimum degree of a process, nodes assigned a high priority, etc., can be known.

According to the invention, when one of the arrows branches to a plurality of nodes or modules, it is indicated that all of the nodes or modules are to be executed or that one of them is to be executed alternatively. Thus, the process condition can be checked according to the indication.

According to the invention, since the node display state is changed in response to the process state of each node, conditions such that the node to be processed is unprocessed can be easily understood.

According to the invention, information relevant to each node is stored as node relevant information. On the other hand, specified nodes are stored in order and the job contents are determined from the node specification order. As a result, the node relevant information to be referenced in the determined job contents is selected by the selection means.

According to the invention, when a node is specified, the node relevant information selected by the selection means is displayed for the specified node. Thus, the relevant information optimum for the job is referenced.

According to the invention, when one node is specified, the subsequent node to be inevitably specified is automatically selected or executed.

According to the invention, information relevant to all nodes contained in the module is stored as module relevant information and when executing any node contained in the module or aiding in the execution thereof, the module relevant information is placed in a state in which the information can be referenced. Resultantly, relevant information can be assigned in multi-to-one point relation with the nodes contained in the module.

According to the invention, the attribute information contains information indicating whether or not the node or module is indispensable for carrying out a job. The system gives a warning when an indispensable node or module is not specified for carrying out the job, thus preventing steps from being skipped.

According to the invention, when desired nodes are specified, they are connected in order for automatically generating a new flowchart. This flowchart is displayed and also stored. Node execution or aid in the execution is again enabled from the new flowchart.

According to the invention, application programs providing various functions can be executed for executing the specified node or aiding in the execution of the node. On the other hand, linkage information for linking the application programs is set and retrieval is executed according to the linkage information. When the specified node is executed or aiding in the execution thereof is performed, the application programs are executed appropriately and necessary information of output information of other application programs is retrieved according to the linkage information.

According to the invention, the start-or termination of an application program or file operation in the application program is monitored and when one of the events occurs, the step occurring as the application program is executed is connected to the new flowchart as a node.

According to the invention, the new flowchart can be edited by the edit means.

According to the invention, when the difference between the new flowchart and a predetermined standard flowchart is greater than a given determination criterion, a warning is given; a step selection error can be easily found.

According to the invention, the format to be adopted as the information format of output information provided as a result of execution of each node contained in the new flowchart is specified, and the output information is converted into the specified information format. Then, the output information converted into the specified information format is integrated.

### BRIEF DESCRIPTION OF THE DRAWINGS

The above and other objects and features of the present invention will be more apparent from the following description taken in conjunction with the accompanying drawings.
Figure 1 is a drawing showing a sequence of steps for replacing an interlocked cage-door cable for one elevator;
Figure 2 is a flow source chart displayed on a system of the invention;
Figure 3 is a drawing showing how nodes and relevant information are connected in multi-to-one point relation;
Figure 4 is a drawing showing how a selective flowchart is generated by taking the cable replacement work in the first embodiment as an example;
Figure 5 is a drawing showing representative steps for building a bridge over a river;
Figure 6 is a drawing showing how application programs are linked by a hypermedia technique;
Figures 7A and 7B show a setting example of linkage information; and
Figure 8 is a drawing showing a front cover of a proposal.

### DETAILED DESCRIPTION OF THE EMBODIMENTS

Referring now to the accompanying drawings, a description will be given in more detail of preferred embodiments of the invention.

### Embodiment 1:

A first embodiment of the invention is a basic example for describing the features of a flow source chart used by a system of the invention and support offered by the system of the invention for carrying out a job. More useful systems will be introduced in second and later embodiments.

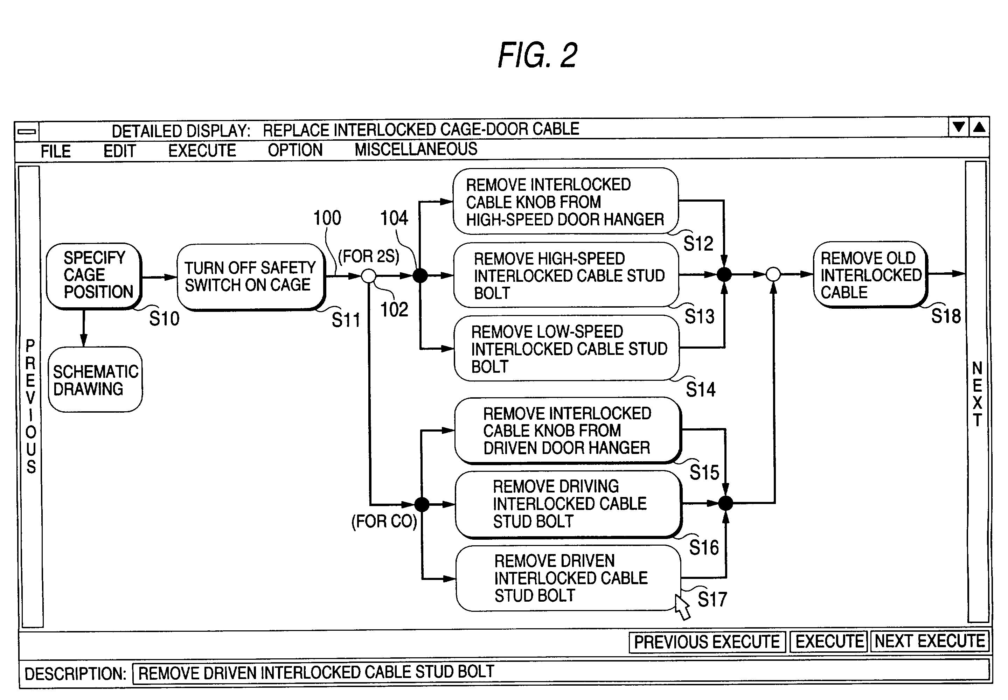

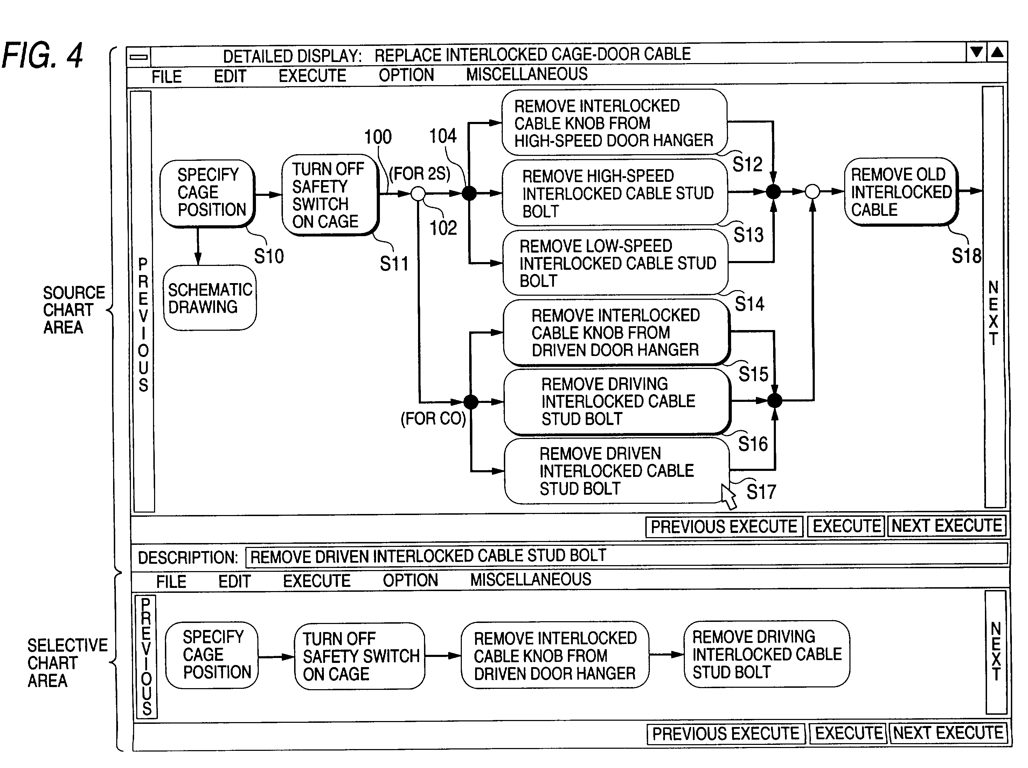

First shown is how an elevator cable replacement job is carried out on reception of support of the process information management system of the invention. Figure 2 is a flow source chart displayed on the system of the invention corresponding to Figure 1. The flow source chart shown in Figure 2 is a chart used as an elevator maintenance manual as conventional and is input to the system.

The notation in Figure 2 is characterized by the fact that an AND or OR indicator is given for indicating whether a plurality of nodes should be executed all or alternatively when an arrow branches to the nodes. That is, an arrow 100 takes two branches depending on the type of elevator and either of them may be executed alternatively, thus an OR indicator 102 is given with a white dot. On the other hand, steps S12-S14 or S15-S17 should be executed all, thus AND indicators 104 and 106 are given with black dots. A white or black dot is also placed for convenience corresponding to a branch point at a point where the branch arrows again gather.

Introduction of the AND and OR indicators produces the following effects:
1. Flow source chart becomes easy to see;
2. executed steps can be checked for skip; and
3. steps with the AND indicator can be executed concurrently.

First, for 1, the flowchart can be made compact by using AND indicators properly. For 2, if an OR indicator is given, one of branches following the OR indicator may be executed and if an AND indicator is given, all of branches following the AND indicator need to be executed. Therefore, as described below, the process state is checked at an intermediate point or the termination of work, thereby preventing some steps from being skipped.

On the other hand, the effect in 3 can be produced, for example, if two workers are allowed to handle steps S12 and S13 at the same time. In such a case, if the flow source chart in Figure 1 is used, S13 cannot be executed unless S12 is complete; the work time is increased. Therefore, an AND indicator may be used for steps that can be executed concurrently.

Next, how the system of the embodiment supports cable replacement work based on the flow source chart will be discussed.

First, a worker specifies the S10 node by clicking the mouse button, etc. Then, information indicating the cage position is extracted from the database and is displayed on the entire screen or a window as a part of the screen. This information may be characters or a drawing or photo indicating the cage position. The worker uses the information to determine the cage position. At this time, by assuming that the S10 node has been executed, the display state of the color, node frame thickness, or the like changes and a message "S10 complete" is stored in a memory, whereby the step can be checked for skip. If relevant information furthermore exists, a box for the relevant information may be connected as shown below S10 in Figure 2. This box can also be referenced by clicking the mouse button, etc.

On the other hand, if the worker is skilled and familiar with the cage position, an operator need not reference the database. At this time, the worker specifies "no node reference" rather than "specification of node." In this case, the S10 display state changes and the message "S10 complete" is stored, but the database is not referenced or displayed.

Upon completion of S10, the worker advances to S11 at which the operator also references the database as necessary. Then, removal of the cable is complete when the worker advances to S18 in a similar manner. After this, the worker may execute steps S19 and later (not shown), namely, attach a new cable and check the operation and complete the work sequence.

The embodiment can be applied as follows:

### [Application 1] Putting nodes into a module

Steps S10-S18 correspond to cable removal of the first half of the cable replacement work. Then, S10-S18 are stored in the system as a "cable removal" module. As a result, when a flow source chart of another job related to the elevator, such as an overhaul is prepared, the module can be adopted intact. More generally speaking, a plurality of nodes closely related to each other may be grouped to create a module, which may be stored.

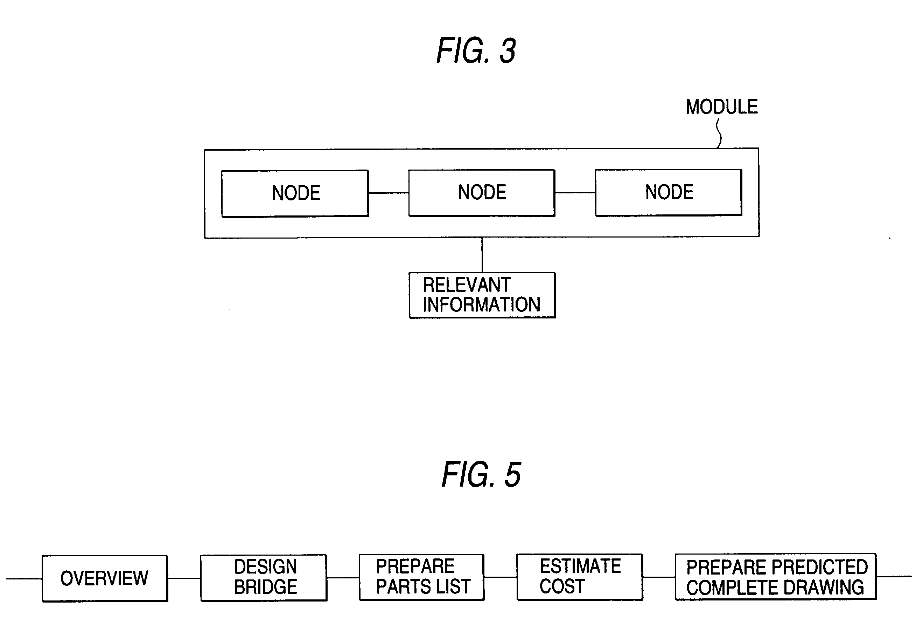

By putting nodes into a module, relevant information can also be assigned to the module. That is, in the embodiment, for example, the external view of the cable to be removed should be able to be referenced even if any node in the module is during processing. Then, relevant information common to nodes contained in a module is connected downstream from the module so that it can be referenced from any desired nodes. Therefore, in this case, the nodes contained in the module and the relevant information are connected in multi-to-one point relation, as shown in Figure 3.

### [Application 2] Limitation of relevant information box display

To connect a large number of relevant information boxes, the box display state is changed according to importance of the boxes. For example, only boxes referenced in the past exceeding a given number of times can be displayed and when an upper limit is specified for the processing time, database retrieval time, etc., the number of boxes to be displayed can also be limited so that it does not exceed the upper limit. When use of the system is started, the user enters his or her learning degree, whereby the number of boxes to be displayed may be changed according to the learning degree so as to increase or decrease it.

### [Application 3] Assignment of attribute information

For example, in the product planning job from market research discussed in [Prior Art], all steps contained in the flow source chart should not necessarily be executed. Particularly, if the flow source chart is greatly subdivided, each person should prepare a selective flowchart according to his or her purpose, etc. Then, attribute information based on which steps are selected is assigned to each node and necessary steps can be retrieved with the information as a key.

The standard required time for the process, importance of the process, whether or not the process is indispensable, difficulty of work, whether or not the job is for the beginner, the name of the database to be accessed, the name of the module containing the node, etc., can be listed as attribute information examples. Therefore, for example, to execute a job, the beginner may use "for beginner" as a key for retrieval. The nodes meeting the condition should be highlighted on the flow source chart.

Importance is assigned to each node, thereby determining a sequence of nodes which are important or to be processed preferentially. Thus, arrows concatenating the nodes may be highlighted. In this case, further arrows concatenating a sequence of nodes high in occurrence frequency or arrows becoming optimum branches as the current process can also be highlighted. Such highlighted display provides a so-called navigation function.

Attribute information can also be assigned for each module, in which case the creator, the creation date and time, the user, the number of use times, etc., of the module can be assigned in addition to attribute information like the above-mentioned node attribute information. If modules that can be connected preceding and following the module are predefined for each module, for example, an automatic module connection function can also be provided.

### [Application 4] Display suited to node processing state

The technique for changing the display state of a completed node is extended for displaying not only processed nodes, but also the current node being processed and unprocessed nodes to be processed in accordance with the processing state of each node. This display mode may be executed in module units.

### [Application 5] Step skip check

If a node to which indispensable attribute information is assigned is not executed, a check can be made upon completion of work or at a given intermediate stage to display warning. Such a point where a check should be made can be provided by assigning a given mark to an arrow on the flow source chart (the arrow is called a "check point"). That is, when execution passes through the check point, the system of the embodiment may automatically check for step skip.

Introduction of check points would also enable automatic module generation. This means that if nodes sandwiched between two check points are determined to be a module, the need for manually determining modules is eliminated.

### [Application 6] Display of optimum relevant information

If a large number of relevant information pieces exist, this application is to automatically select and display the relevant information to be referenced depending on the job contents. The relevant information may vary depending on whether an elevator job, for example, is maintenance work involving replacement like cable removal or simple inspection work. Generally, nodes specified in sequence have some feature depending on the job contents. For example, if one door is opened, then closed without performing actual work such as replacement of parts, the likelihood of inspection work is strong. Therefore, the job contents are determined from the specified nodes as much as possible and when the next node is specified, optimum relevant information for the job contents with respect to the node may be selectively displayed.

### [Application 7] Automatic node selection

When neither OR nor AND indicators do not exist and nodes are connected in order in one-to-one correspondence, if the preceding node is specified, next the following node should inevitably be specified. Therefore, in such a case, automatic node selection or execution is enabled.

In automatic selection, for example, relevant information to the next node can also be displayed in parallel and the arrow toward the next node can be highlighted for convenience of carrying out the job. On the other hand, automatic execution is to automatically execute nodes that can be executed in succession in the system, and is applied to simple spreadsheet nodes, etc. It will also be discussed later in third and fourth embodiments.

### Embodiment 2:

We have discussed the system which aids in the execution of desired nodes from the flow source chart in the first embodiment. In a second embodiment of the invention, we will discuss a system which automatically generates a new flowchart, namely, a selective flowchart as nodes are specified. Such a selective flowchart is always displayed and is also stored in the memory of the system for later use as a reexecutable flowchart.

Figure 4 is a drawing showing how a selective flowchart is generated by taking the cable replacement work in the first embodiment as an example. In the figure, the same flow source chart as in Figure 2 is displayed in the upper area of about two thirds of the screen, which will be hereinafter called the source chart area. The embodiment is characterized by the fact that a selective flowchart is displayed in the area below the flow source area, which will be hereinafter called the selective chart area. The selective flowchart is generated in the following sequence:

First, nothing is displayed in the selective chart area. In this state, if S10 in the flow source chart is specified, information concerning S10 is displayed in a window, etc., (not shown) as in the first embodiment, and 10 is copied into the selective chart area. Subsequently, if S11 is specified, likewise information concerning S11 is displayed and the Sll node is connected following the S10 node by an arrow. Figure 4 shows a selective flowchart automatically generated when S10, S11, S15, and S16 are thus specified in order. After this, if the steps are completed, entries such as the worker name, work date and time, work title, and work time are stored in the memory of the system together with the selective flowchart.

According to the embodiment, whenever a desired node is selected and executed, the step is displayed and recorded as a kind of journal information. However, normal journal files and selective flowchart records according to the embodiment differ in the following points:
1. In the former, any operation performed for the system is recorded unconditionally, but in the latter, information concerning nodes selected for execution is recorded systematically.
2. In the former, operation procedures are recorded, but normally data processing, etc., associated with the operation cannot be repeated. In the latter, however, nodes in the selective flowchart and those in the flow source chart are generated in the same image viewed with respect to software, whereby nodes can also be specified on the selective flowchart for execution of the nodes.

As a result, the embodiment provides the following advantages:

### 1. Knowhow can be automatically accumulated

Since the selective flowcharts handled by each person are automatically left, the workers can keep track of how the best result can be produced by executing which steps in what order. Resultantly, the beginner can adopt one of the selective flowcharts stored in the past for jobs having conditions similar to those of the job to be carried out by him or her rather than a large flow source chart.

### 2. The system need not be carried in the job site

If a selective flowchart is previously generated at the installation location of the system and only the selective flowchart and its required data are downloaded into a portable terminal, only the portable terminal needs to be carried in the site.

The embodiment has been outlined; the following applications of the embodiment are possible:

### [Application 1] Editing selective flowchart

In a selective flowchart, specified nodes are connected in the specification order, but changing of the order or addition or deletion of the nodes may be wanted depending on the situation. Then, an editor for editing selective flowcharts is provided. It may be similar to the editor used to create a flow source chart.

### [Application 2] Checking selective flowchart

A warning is also given when a selective flowchart differs greatly from a predetermined standard flowchart in addition to'the case where indispensable steps are skipped as in the first embodiment. For example, a flowchart selected by a skilled person for the same job can be adopted as the standard flowchart. The standard flowchart can also be automatically generated by specifying the name of the worker and the name of the job. As determination criteria, for example, if two different nodes are selected from the standard flowchart, a warning may be given.

### Embodiment 3:

The system of the first or second embodiment aids only in the execution of steps. In a third embodiment of the invention, a system which can directly execute steps will be discussed. The system starts an application program required for node execution, retrieves information provided by other application programs, and uses the information to automatically execute nodes if possible.

The cable replacement work in the first embodiment is all performed by human hands. Therefore, the system of the invention does not execute steps for itself and only aids in the step execution by providing information required for the execution. However, in some jobs, steps may be able to be executed by software in the system.

For example, to build a bridge over a river, representative steps such as "overview," "design bridge," "list parts," "estimate costs," and "prepare predicted complete drawing" occur as shown in Figure 5. In this case, for example, in "list parts," a list can also be created automatically from a CAD drawing of bride design. Costs for parts can also be automatically calculated by using the list thus obtained as a key to retrieve a parts database.

To execute one node, the system of the embodiment links information provided by a number of application programs and uses the linked information. It assumes that application programs of document preparation, CAD, spreadsheet, image edit, etc., are required in the above-mentioned bridge example.

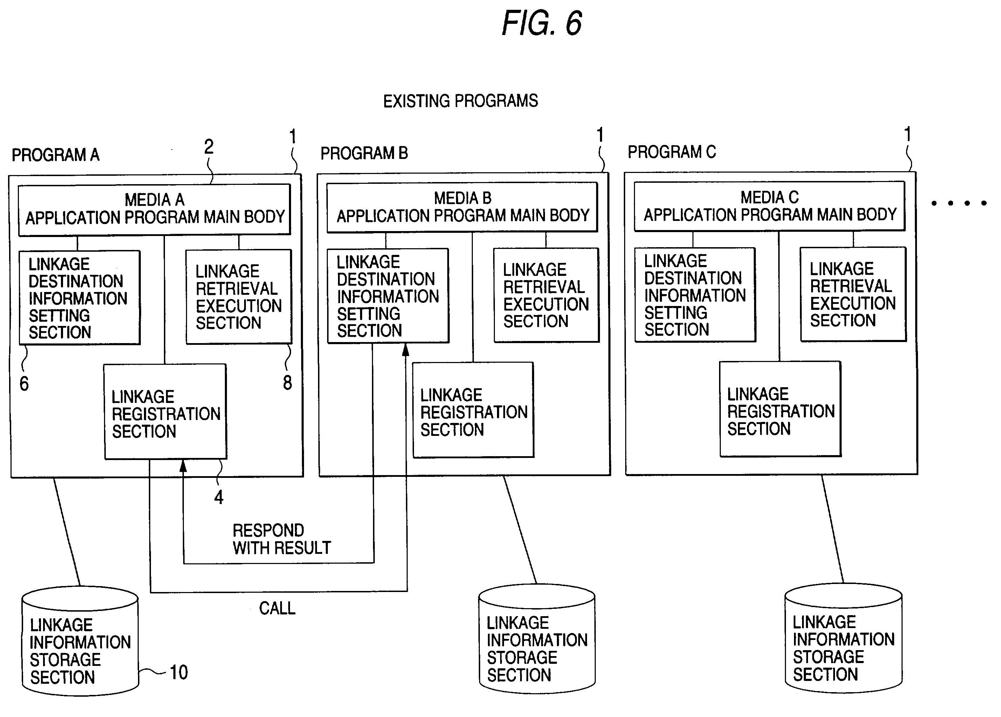

The embodiment uses a hypermedia technique as a tool for linking the application programs. The most general hypermedia technique will be outlined. Figure 6 is a drawing showing how application programs are linked by the hypermedia technique. However, the embodiment can also adopt any configuration other than the configuration discussed below if it satisfies necessary functions and requirements as a hypermedia system.

In Figure 6, each application program 1 contains an application program main body 2 for providing the original function of the application program independently of linkage, a linkage registration section 4 for setting information for linkage and calling the linkage destination information setting section of the destination to which the application program is linked, a linkage destination information setting section 6 being called at the linking time from another application program (or the home application program) for identifying the link destination information, and a linkage retrieval execution section 8 calling or called from another application program (or the home application program) at the linkage retrieval time. A linkage information storage section 10 stores linkage information set by the linkage registration section 4 and the linkage destination information setting section 6. According to the configuration, the system can link information handled by the application programs and at the retrieval time, can use the linkage to call another application program or information piece provided in the system from one information piece.

Registration of linkage information will be discussed with reference to Figure 6. First, linkage from one information piece to another will be considered. At this time, identifiable information used as a linkage source, which will be hereinafter called an "anchor," is created or extracted in application program 1 for linkage registration.

The application program 1, which will be hereinafter called the "linkage source application program," calls the linkage registration section 4 of another application program 1 to which the linkage source application program is to be linked, which will be hereinafter called the "linkage destination application program," and sets anchor information. Normally, identifiable information in the link source application program, such as a proper ID, is set as the anchor information. Upon determination of the anchor information used as the linkage source in the linkage registration section 4, the linkage source application program calls the linkage destination application program or the linkage destination information setting section 6 corresponding thereto for setting linkage destination information.

The linkage destination information setting section 6 in the linkage destination application program identifies linkage destination information. Information identified and available in the linkage destination application program is set. When the information is set, the linkage destination information setting section 6 returns the information to the linkage destination information setting section 6 in the linkage source application program. The linkage destination information setting section 6 stores a pair of the anchor information and linkage destination information in the linkage information storage section 10.

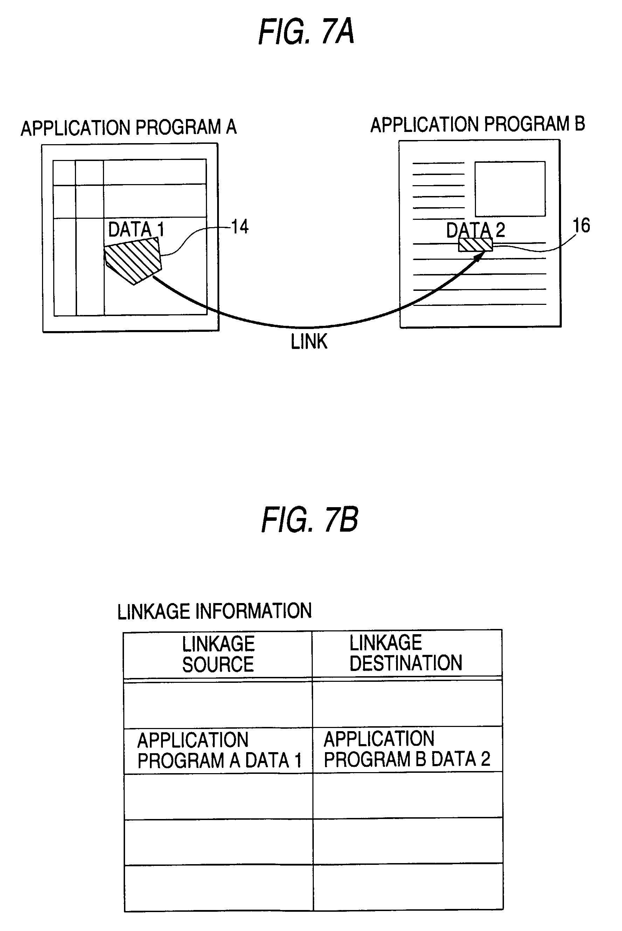

Figures 7A and 7B show a setting example of linkage information. In Figure 7A, an anchor 14 is created in the linkage source application program (program A) and application program information 16 identified by the linkage destination information setting section 6 is shown in the linkage destination application program (program B). Information managed by the home application programs and other application programs is linked to the anchor 14 and the application program information 16, and the linkage information is registered in the linkage information storage section 10. Figure 7B shows an example of the contents of the linkage information storage section 10.

Next, the retrieval operation will be discussed with reference to Figure 6.

Assume that the information shown in Figures 7A and 7B is registered in the linkage information storage section 10. The application program A retrieves information in the linkage retrieval execution section 8 with the anchor (Datal) as a key as the linkage retrieval object and fetches destination application program information. Here, program B Data2 is resultant information from the retrieval. The linkage retrieval execution section 8 uses the retrieval result to specify Data2 for calling the linkage destination application program B.

The system of the embodiment uses the hypermedia technique, whereby to execute the specified node, necessary information is retrieved according to the linkage information and information can be transferred between different application programs. In the above-mentioned bridge example, if the node of "list parts" is specified, first the listing application program is started, next parts data required for the listing is retrieved from the CAD application program involved in design of the bridge. Thus, a parts list can be created automatically.

The following application of the embodiment is possible:

### [Application 1] Putting application program into node

In addition to the case where application programs are started automatically as a node is specified as described above, the user of the system executes an application program explicitly, execution of the application program is assumed to be a step and is automatically connected to a selective flowchart. This is enabled by monitoring the start or termination of the application program or file operation such as file update in the application program. That is, the application is to provide an application program monitor section for monitoring events related to application programs.

### Embodiment 4:

We have discussed the system which uses the hypermedia technique to link necessary information among application programs for executing nodes in the third embodiment. In a fourth embodiment of the invention, a system which converts output information provided by application programs into a predetermined information format for integration as an extension of the third embodiment. In the fourth embodiment, the flowchart shown in Figure 5 is also used.

As shown in Figure 5, the whole job for building a bridge can be classified into representative steps such as "overview," "design bridge," "list parts," "estimate costs," and "prepare predicted complete drawing." The drawing may be thought of as a selective flowchart.

The system of the embodiment has the following feature configuration:

### 1. Information format specification section

The format to be adopted as the information format of output information provided as a result of execution of each node contained in a selective flowchart is specified. In Figure 5, for example, normal text data format or the data format proper to the document preparation application program is adopted for the "overview" node output information. The "design bridge" node output information is thought of as image data and some character data. In the information format specification section, the format of the final information to be provided at conversion and integration described below is specified. For example, "text format," "image format," "video format," "voice format," or the like is specified by clicking the mouse button. Therefore, to execute the later integration easily and efficiently, it is desired that the application program output information used in the system contains a common data format.

### 2. Information format conversion section

Node output information is converted according to the specification in 1. That is, if the "text format" is specified, first only text data is extracted from the document, etc., output from the "overview" node. Likewise, only text data is extracted also from output information of other nodes.

### 3. Information integration section

The text data converted into the specified format by the information format conversion section in 2 is integrated and recorded on a predetermined medium. Integration is executed by sending all converted information to a specific document preparation application program one after another. Media such as floppy disk, hard disk contained in the system, and video tape may be used. To integrate image data, print sheets, photos, etc., produced by a color printer can also be adopted. When the installation location of the system differs from the job site as in the cable replacement in the first embodiment, it is convenient to record data on a portable medium and carry it.

According to the embodiment, the node output information can be integrated, thus the following application of the embodiment is possible:

### [Application 1] Preparation of typical documents

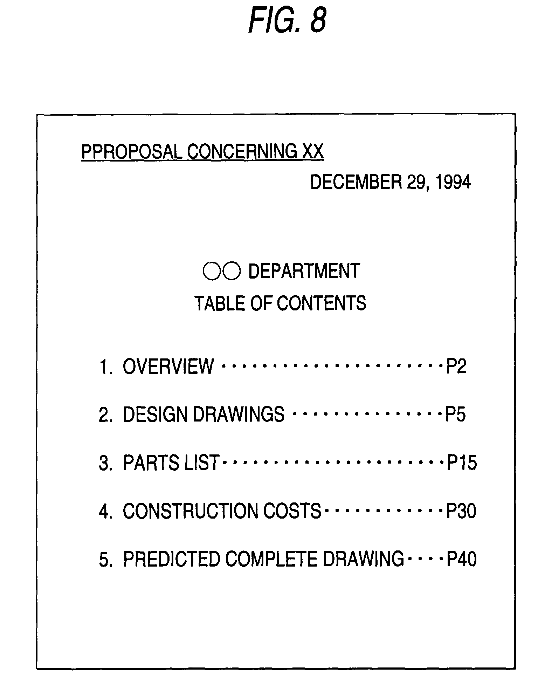

For example, use of output information of the nodes in Figure 5 for preparing a "proposal concerning building of the bridge" will be considered. This proposal is used as a document submitted for bidding or material in the company. In this case, a title is given automatically for each node, a table of contents is created, and a document is generated automatically in the proposal form. That is, in the above-mentioned example, a proposal having a front cover as shown in Figure 8 is generated.

Since the type of typical document is almost determined depending on the job, it is desired that several types of basic forms, such as a proposal, plan, work manual, sales plan, and design instruction, are provided and that the document to be generated can be specified. Since it is possible that image data need not be contained or needs to be recorded monochromatically in some documents, the rules are standardized, thereby enhancing the effect of the embodiment.

As we have discussed in detail, according to the invention, as a desired node is specified, application programs required for executing the node or aiding in the execution thereof are executed. At this time, information which is output by other application programs and is to be used can also be retrieved according to the linkage information. Thus, the object of the invention is accomplished, namely, step execution or aiding in the execution is enabled.

According to the invention, a module can be efficiently used to easily generate another flow source chart.

According to the invention, the node or module satisfying a predetermined requirement can be retrieved according to the node or module attribute information. Thus, job support suited to each person can be provided, because each person can determine the attribute used as a retrieval key matching his or her purpose.

According to the invention, since the arrow display state is changed in response to the priority, importance, occurrence frequency, or optimum degree of a process, nodes assigned a high priority, etc., can be known, and guidelines for carrying out the job are provided.

According to the invention, when one of the arrows branches to a plurality of nodes or modules, whether all of the nodes or modules are to be executed is indicated. Thus, steps are checked for skip and the nodes that can be handled at the same time can be indicated.

According to the invention, since the node display state is changed in response to the process state of each node, conditions such that the node to be processed is unprocessed can be easily understood.

According to the invention, since node relevant information is selected according to the job contents, the relevant information to be referenced in various jobs can be known.

According to the invention, the relevant information to be referenced in various jobs is displayed, thus providing convenience for carrying out the jobs.

According to the invention, when one node is specified, the subsequent node to be inevitably specified is automatically selected or executed, thus providing convenience for the jobs.

According to the invention, information relevant to all nodes contained in the module is stored as module relevant information. Thus, when executing any node contained in the module or aiding in the execution thereof, the module relevant information is always placed in a state in which the information can be referenced. Resultantly, convenience for jobs is provided.

According to the invention, a warning is given according to the attribute information when an indispensable node or module is not specified for carrying out the job, thus preventing important steps from being skipped.

According to the invention, when desired nodes are specified, they are connected in order for automatically generating a new flowchart. This flowchart is displayed and also stored. Node execution or aid in the execution is again enabled from the new flowchart. Therefore, knowhow can be automatically accumulated, because the beginner can adopt one of the selective flowcharts stored in the past for jobs having conditions similar to those of the job to be carried out by him or her rather than a very large flow source chart.

According to the invention, application programs providing various functions can be executed for executing the specified node or aiding in the execution of the node. At the time, necessary information of output information of other application programs is also retrieved according to the linkage information. Thus, the process required for carrying out the job can be executed efficiently for a short time.

According to the invention, the step occurring as an application program is executed is also connected to a selective flowchart as a node. Thus, when the nodes in the selective flowchart are reexecuted, the former execution can be completely repeated.

According to the invention, since a selective flowchart can be edited, job support suited to each person can be provided.

According to the invention, when the difference between a selective flowchart and a predetermined standard flowchart is great, a warning is given. Thus, a step selection error can be easily found.

According to the invention, the output information provided as a result of execution of each node contained in a selective flowchart is integrated in a given information format. Thus, routine jobs can be executed efficiency.

The foregoing description of a preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A process information management system, when steps making up a sequence of processes for carrying out a predetermined job are defined as nodes and a concatenation line placed between the nodes for indicating process order lines are defined as arrows, which executes a desired node from a process flowchart using the nodes and arrows or aids in the execution of the node, said system comprising:
means for specifying a desired node from the nodes;
means for executing application programs providing various functions for executing the specified node or aiding in the execution of the node;
means for setting linkage information for linking the application programs; and
means for executing retrieval according to the linkage information;
wherein for executing the specified node or aiding in the execution of the node, the application programs are executed appropriately and information which is output by other application programs and is to be used is retrieved according to the linkage information.

2. The process information management system as claimed in claim 1, further comprising:
means for grouping nodes closely related to each other; and
means for storing the grouped nodes as a module.

3. The process information management system as claimed in claim 1, further comprising:
means for storing attribute information of each of said nodes or each of said modules;
means for retrieving nodes or modules satisfying a predetermined requirement according to the attribute information; and
means for highlighting the nodes or the modules satisfying the predetermined requirement on the flowchart.

4. The process information management system as claimed in claim 1, further comprising:
means for changing a display state of each of the arrows in response to priority, importance, occurrence frequency, or optimum degree of a process.

5. The process information management system as claimed in claim 1, further comprising:
means, when one of the arrows branches to a plurality of nodes or modules, for indicating that all of the nodes or modules are to be executed or that one of them is to be executed alternatively.

6. The process information management system as claimed in claim 1, further comprising:
means for storing a process state of each node; and
means responsive to the process state of each node for changing the display state of the node.

7. The process information management system as claimed in claim 1, further comprising:
means for storing information relevant to each node as node relevant information;
. means for storing specified nodes in order;
means for determining job contents from the node specification order; and
means for selecting node relevant information to be referenced in the determined job contents.

8. The process information management system as claimed in claim 7, further comprising:
means, when a node is specified, for displaying the selected node relevant information for the specified node.

9. The process information management system as claimed in claim 1, further comprising:
means, when one node A is specified, for determining a subsequent node B to be inevitably specified; and
means for automatically selecting or executing the subsequent node B upon completion of execution of the node A or aid in the execution thereof.

10. The process information management system as claimed in claim 2, further comprising:
means for storing information relevant to all nodes contained in the module as module relevant information; and
means for placing the module relevant information in a state in which the information can be referenced when executing any node contained in the module or aiding in the execution thereof.

11. The process information management system as claimed in claim 3, wherein the attribute information contains information indicating whether or not the node or module is indispensable for carrying out a job; and
said system further comprising:
means for storing nodes or modules specified during carrying out the job; and
means for giving a warning when an indispensable node or module is not specified for carrying out the job.

12. A process information management system, when steps making up a sequence of processes for carrying out a predetermined job are defined as nodes and a concatenation line placed between the nodes for indicating a process order is defined as an arrow, which executes a desired node from a process flowchart using the nodes and arrows or aids in the execution of the node, said system comprising:
means for specifying a desired node from the nodes;
means for connecting the specified nodes in order for automatically generating a new flowchart;
means for displaying the new flowchart generated; and
means for storing the new flowchart generated, wherein
node execution or aid in the execution is again enabled from the new flowchart.

13. The process information management system as claimed in claim 12, further comprising:.
means for executing application programs providing various functions for executing the specified node or aiding in the execution of the node;
means for setting linkage information for linking the application programs; and
means for executing retrieval according to the linkage information;
wherein when the specified node is executed or aiding in the execution of the node is performed, the application programs are executed appropriately and necessary information of output information of other application programs is retrieved according to the linkage information.

14. The process information management system as claimed in claim 13, further comprising:
means for monitoring start or termination of the application program or file operation in the application program; and
means for connecting a step occurring as the application program is executed to the new flowchart as a node when the start or termination of the application program or file operation in the application program occurs.

15. The process information management system as claimed in claim 12, further comprising means for editing the new flowchart.

16. The process information management system as claimed in claim 12, further comprising means for giving a warning when a difference between the new flowchart and a predetermined standard flowchart is greater than a given determination criterion.

17. The process information management system as claimed in claim 12, further comprising:
means for specifying a format to be adopted as an information format of output information provided as a result of execution of each node contained in the new flowchart;
means for converting the output information into the specified information format; and
means for integrating the output information converted into the specified information format.
